# EUROPÄISCHE PATENTSCHRIFT

(11) **EP 0 940 998 B1**
(45) Veröffentlichungstag und Bekanntmachung des Hinweises auf die Patenterteilung: **09.03.2005**
(21) Anmeldenummer: 99103646.8
(22) Anmeldetag: 25.02.1999
(51) Int. Cl.: H04Q 3/66

(54) **Verfahren zur Verkehrslenkung in Telekommunikationsnetzen**
Traffic routing method in telecommunication networks
Procédé de routage de trafic dans des réseaux de télécommunication

(30) Priorität: 04.03.1998 DE 19809045
(43) Veröffentlichungstag der Anmeldung: 08.09.1999
(73) Patentinhaber: Deutsche Telekom AG, 53113 Bonn (DE)
(72) Erfinder: Pinker, Gerold, 64285 Darmstadt (DE)

(56) Entgegenhaltungen:
- US-A- 5 406 620
- US-A- 5 550 909
- ITU-T RECOMMENDATION Q.764, SIGNALLING SYSTEM NO.7 - ISDN USER PART SIGNALLING PROCEDURES, März 1993 (1993-03), XP002160310

## Beschreibung

Die Erfindung betrifft ein Verfahren zur Verkehrslenkung in Telekommunikationsnetzen, insbesondere vermittelnden Telekommunikationsnetzen nach dem Oberbegriff des Patentanspruchs 1.

Ein derartiges Verfahren zur Verkehrslenkung in Telekommunikationsnetzen ist aus der ITU-T Recommendation Q.764 (XP002160310) bekannt. Die Verkehrslenkung erfolgt unter anderem in Abhängigkeit einer Zielkennzahl, eines ISDN Preference Indicators (IPI) und eines Transmission Medium Requirements (TMR).

Allgemein sind vermittelnde Telekommunikationsnetze, wie das öffentliche Telefonnetzwerk, auch das Public Switched Telephone Network (PSTN/ISDN), seit längerem allgemein bekannt. Die an den Netzübergangsvermittlungseinheiten und Auslandsvermittlungseinheiten angebundenen Nutzer solcher öffentlicher Telefonnetzwerke werden in den nachfolgenden Vermittlungseinheiten, zum Beispiel Weiterverkehrsvermittlungsstelle, Netzübergangsvermittlungseinheit, Auslandsvermittlungseinheit, entsprechend der dort eingerichteten Verkehrslenkung mittels Routing-Tabellen in Abhängigkeit unter anderem einer Zielkennzahl, des zum Beispiel international verwendeten ISDN Preference Indicators und des Transmission Medium Requirements weitervermittelt. Eine carrierspezifische Verkehrslenkung ist hierbei technisch nicht möglich, da weder eine spezielle Kennzeichnung des nationalen oder internationalen Carriers erfolgt noch in nachfolgenden Vermittlungseinheiten eine individuelle Verkehrslenkungstabelle eingerichtet werden kann.

Eine in der ersten und in den nachfolgenden Vermittlungseinheiten eingerichtete Kennzahlensperre kann nicht carrierspezifisch und bündelindividuell eingerichtet oder außer Kraft gesetzt werden

Aus der US-A-5 406 620 ist das Problem offenbart, ein Telekommunikationsnetz zu schaffen, das eine carrierindividuelle Verkehrslenkung in den Vermittlungseinheiten der höheren Netzebenen erlaubt. Hierfür wird ein spezielles Bit (OCP-Flag) zur Kennzeichnung des Carriers als sonderroutingberechtigt benutzt.

Der Erfindung liegt ebenfalls die Aufgabe zugrunde, ein Verfahren zur carrierspezifischen Verkehrslenkung in Telekommunikationsnetzen, insbesondere vermittelnden Telekommunikationsnetzen, wie im öffentlichen Telefonnetzwerk, auch Public Switched Network genannt, zu schaffen, das in Abhängigkeit einer carrierspezifischen Kennung bzw. Kennzeichnung eine besondere carrierindividuelle Verkehrslenkung in der ersten und in den nachfolgenden Vermittlungseinheiten erfolgen soll, wobei gleichzeitig eine in der ersten und den nachfolgenden Vermittlungseinheiten in der höheren Ebene eingerichtete Umlenkung des Verbindungswunsches auf Sonderhinweisansage, auch Kennzahlensperre genannt, carrierspezifisch und bündelindividuell außer Kraft setzbar sein soll.

Die erfindungsgemäße Lösung der Aufgabe ist im Kennzeichen des Patentanspruchs 1 charakterisiert.

Weitere Lösungen bzw. Ausgestaltungen des Erfindungsgegenstands sind in den Kennzeichen der Patentansprüche 2 bis 10 charakterisiert.

Durch die angegebenen Lösungen bzw. Ausgestaltungen des Erfindungsgegenstands kann bei Bedarf den an den Netzübergangsvermittlungseinheiten und Auslandsvermittlungseinheiten angebundenen nationalen und internationalen Carriern des jeweiligen vermittelnden Telekommunikationsnetzes in den nachfolgenden Vermittlungseinheiten eine carrierindividuelle Verkehrslenkung in Abhängigkeit einer oder mehrerer Zielkennzahlen, insbesondere des ISDN Preference Indicatorund des Transmission Medium Requirement-Wertes eingerichtet werden. Dadurch wird folgendes beispielsweise ermöglicht:
- eine Führung des Verkehrs nur über Kabelleitungen (Glasfaserleitungen) - unter Ausschluß von Satellitenverbindungen - mit einer höheren Übertragungsqualität, International Bit Error Rate genannt.
- Übertragungsstrecken mit DCME und den damit verbundenen Laufzeiten sowie Clipping können verhindert werden.
- Übertragungssysteme mit einer bestimmten Zeichengabe können ausgewählt werden.
- Es können Verbindungen bestimmter Carrier gewählt werden, unter anderem wegen der Ausprägung/Weiterentwicklung des ISDN User Part Zeichengabesystems Nr. 7.
- Die abgehenden Bündel können carrierindividuell entsprechend ihrer Dimension und dem damit verbundenen Verlust ausgewählt werden.

Die Erreichbarkeit dieses Zieles kann durch den optionalen Rückfall auf die normale Verkehrslenkung auf das Niveau der normalen Verkehrsabwicklung gebracht werden.

Eine dynamische Belastung der digitalen Vermittlungseinheiten wird dadurch minimiert, daß nur bei Empfang der Ursprungskundenkennung entsprechend der Netzbetreiberspezifikation mit gesetztem C-Bit in die gesonderte carrierindividuelle Verkehrslenkungstabelle verzweigt wird. Eine systeminterne Kennzeichnung des Ursprungscarriers bzw. des Eingangsbündels oder ein entsprechender besonderer Parameter NP.UKK, auch Ursprungskundenkennung genannt, mit einem gesetzten E-Bit gestattet individuell eine Kennzahlensperre außer Kraft zu setzen.

Die Carrierkennung schafft die Voraussetzung für eine eindeutige Verkehrserfassung, das heißt Registrierung und Abrechnung, des Ursprungscarriers an einer nachfolgenden Vermittlungseinheit, obwohl dort Bündelursprung nicht mehr erkennbar ist. Dies kann insbesondere bei der Abwicklung von internationalem Transitverkehr und beim Durchschleifen des Verkehrs über das nationale Netz im Rahmen des Interconnection angewendet werden, sogenannte Ilg-Registrierung.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: die Nutzungsmöglichkeit einer carrierspezifischen Verkehrslenkung, angewendet auf eine nationale Netzübergangsvermittlungseinheit in Verbindung mit einer nachfolgenden Auslandsvermittlungseinheit;
- Fig. 2: zeigt die Nutzungsmöglichkeit der carrierspezifischen Verkehrslenkung, angewendet auf eine Auslandsvermittlungseinheit in Verbindung mit einer nachfolgenden Auslandsvermittlungseinheit;
- Fig. 3: zeigt die Nutzungsmöglichkeit der carrierspezifischen Verkehrslenkung, angewendet auf eine Auslandsvermittlungseinheit in Verbindung mit einer nachfolgenden Netzübergangsvermittlungseinheit und
- Fig. 4: zeigt die Anwendung eines Kennzahlensperrindikators für sonstige kommende Bündel am Beispiel einer Handvermittlungsstelle.

Bevor die detaillierte Funktionsweise und Wirkungsweise des erfindungsgemäßen Verfahrens anhand der Figuren und der nachfolgenden Ausführungsbeispiele erklärt wird, soll zunächst eine Beschreibung der grundsätzlichen Operationen des Verfahrens folgen.

Eine carrierspezifische Verkehrslenkung in den Vermittlungseinheiten der höheren Netzebenen wird dadurch erreicht, daß bei Bedarf dem nationalen oder internationalen Carrier im jeweiligen öffentlichen Telefonnetzwerk in der Netzübergangsvermittlungseinheit oder Auslandsvermittlungseinheit ein besonderer Parameter, nämlich die Ursprungskundenkennung NP.UKK gemäß Netzbetreiberspezifikation zugeordnet wird. Dieser Parameter oder die entsprechende Kennzeichnung beinhaltet:
- ein spezielles Bit (C-Bit) zur Kennzeichnung des Carriers als sonderroutingberechtigt,
- einen speziellen Kennzahlensperrindikator (E-Bit), das eine eingerichtete "Kennzahlensperre" außer Kraft setzt,
- eine binär codierte Kundenkennung (mindestens zwei Byte, mit der Möglichkeit zur Vergrößerung).

In äquivalenter Weise kann sonstigen kommenden Bündeln, zum Beispiel von der Handvermittlungsstelle der besondere Parameter Ursprungskundenkennung NP.UKK oder eine entsprechende systeminterne Kennzeichnung innerhalb der ersten Vermittlungseinheit zugeordnet werden. Dieser Parameter oder die entsprechende Kennzeichnung beinhaltet das spezielle Bit (E-Bit), das eine eingerichtete Kennzahlensperre außer Kraft setzt. Sofern ein Verbindungsaufbau zu nachfolgenden Vermittlungseinheiten, wie zum Beispiel Weiterverkehrsvermittlungsstellen, Netzübergangsvermittlungseinheiten, Auslandsvermittlungseinheiten erfolgt, wird dieser Parameter mittels der Initial Address Message (IAM) im ISDN User Part des Zeichengabesystems Nr. 7 übertragen. In der ersten Vermittlungseinheit wird anhand der systeminternen Kennzeichnung oder in den nachfolgenden Vermittlungseinheiten bei Empfang dieses Parameters mit dem gesetzten speziellen Bit (C-Bit) in gesonderte carrierspezifische Verkehrslenkungstabellen verzweigt. Das Sonderrouting erfolgt in Abhängigkeit der Carrierkennung, einer oder mehrerer Zielkennziffern, des ISDN Preference Indicator (IPI)- und des Transmission Medium Requirement (TMR)-Wertes. Es können mehrere Bündel zur Kennzeichnung der möglichen Abgangsbündel eingetragen werden. Wird die gewünschte Zielrufnummer nicht in der zugehörigen Zielkennziffer der carrierspezifischen Verkehrslenkungstabelle gefunden, dann wird automatisch zur normalen Verkehrslenkungstabelle umgeleitet.

Sofern die carrierspezifische Leitweglenkung nicht zum Erfolg führt, zum Beispiel weil kein freies Abgangsbündel gefunden wird, kann carrierindividuell und zielkennzahlabhängig eingerichtet werden, ob der Verbindungswunsch ausgelöst wird oder die normale Verkehrslenkungstabelle angewendet wird. Bei Belegungen mittels der carrierspezifischen Verkehrslenkung in den Auslandsvermittlungseinheiten wird die Verkehrsrückbildung (Quantifizierung) der normalen Verkehrslenkung nicht beeinflußt. Beim Empfang des Parameters ohne das gesetzte Bit (C-Bit), wird in den Vermittlungseinheiten wie in den Weitverkehrsvermittlungsstellen, den Netzübergangsvermittlungseinheiten und den Auslandsvermittlungseinheiten die normale Verkehrslenkung angewendet.

Wird in der ersten Vermittlungseinheit anhand einer systeminternen Kennzeichnung oder in den nachfolgenden Vermittlungseinheiten anhand des besonderen Parameters das gesetzte Bit (E-Bit) empfangen, wird eine Umlenkung des Verbindungswunsches auf Sonderhinweisansage (sogenannte Kennzahlensperre) außer Kraft gesetzt. Es erfolgt, wie beschrieben eine Verkehrslenkung gemäß der normalen Leitweglenkungstabelle bei nicht gesetztem C-Bit oder eine carrierspezifische Leitweglenkung bei gesetztem C-Bit.

Eine Übertragung des besonderen Parameters wird beim Netzübergang in das internationale Netz durch die VE:A oder das Zeichengabezwischennetz durch die VE:N unterdrückt, da es sich um einen nationalen Parameter handelt.

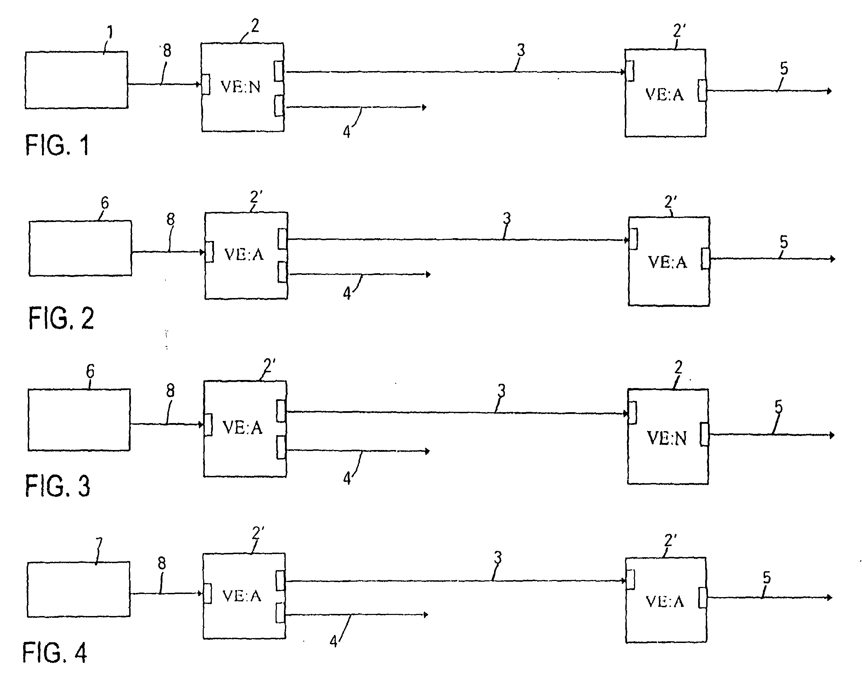

In Fig. 1 ist die Nutzungsmöglichkeit der carrierspezifischen Verkehrslenkung, angewendet auf eine nationalen Netzübergangsvermittlungseinheit (VE:N) 2 in Verbindung mit einer nachfolgenden Auslandsvermittlungseinheit (VE:A) 2' dargestellt. Der nationale Carrier 1 wird über Leitung 8 mit der Netzübergangsvermittlungseinheit (VE:N) 2 verbunden. Die abgehende Leitung 3 führt die Ursprungskundenkennung NP.UKK mit C-Bit, E-Bit sowie die Carrierkennung, zu einer nachfolgenden Auslandsvermittlungseinheit (VE:A) 2' zur Auswertung. Außerdem ist sowohl an der Netzübergangsvermittlungseinheit (VE:N) 2 eine Leitung 4 vorhanden, die das Auswertergebnis führt als auch an der Auslandsvermittlungseinheit (VE:A) 2', nämlich die Leitung 5. Die Leitung 4 führt das Merkmal Auswertung der systeminternen Kennung hinsichtlich der carrierspezifischen Verkehrslenkung und der Kennzahlensperre, während die Leitung 5 das Ergebnis der Auswertung des NP.UKK hinsichtlich der carrierspezifischen Verkehrslenkung und der Kennzahlensperre führt.

In Fig. 2 ist wiederum eine prinzipielle Schaltung zur Durchführung des Verfahrens gezeigt, bei der die Nutzungsmöglichkeit der carrierspezifischen Verkehrslenkung auf eine Auslandsvermittlungseinheit (VE:A) 2' in Verbindung mit einer nachfolgenden Auslandsvermittlungseinheit (VE:A) 2' dargestellt ist. Ein internationaler Carrier ist über die Leitung 8 mit einer Auslandsvermittlungseinheit (VE:A) 2' verbunden. Dort erfolgt das Aufsetzen der Ursprungskundenkennung NP.UKK gemäß Netzbetreiberspezifikation, wie bereits in Verbindung mit Fig. 1 beschrieben. Auch die Auswertung und damit das Ergebnis der Auswertung auf der Leitung 4 ist dem in Fig. 1 Gezeigten äquivalent. Zum Auswerten durch die nachfolgende Auslandsvermittlungseinheit VE:A 2', die über die Leitung 3 mit dem Ausgang der ersten Auslandsvermittlungseinheit 2' verbunden ist, erfolgt die Auswertung, deren Ergebnis wie in Fig. 1 beschrieben auf Leitung 5 zur Verfügung steht.

In Fig. 3 ist ein weiteres Ausführungsbeispiel dargestellt, in dem ein internationaler Carrier 6 über Leitung 8 mit einer Auslandsvermittlungseinheit (VE:A) 2' verbunden ist. Dort erfolgt wiederum das Aufsetzen und die Weiterleitung über Leitung 3 wie in Verbindung mit den vorhergehenden Figuren beschrieben, nur mit dem Unterschied, daß Leitung 3 hier mit einer Netzübergangsvermittlungseinheit (VE:N) 2 verbunden ist. Diese nimmt die Auswertung wie bereits in Verbindung mit den Figuren 1 und 2 beschrieben, vor und gibt das Ergebnis auf Leitung 5 ab. Die Leitung 4 entspricht der in Fig. 2.

In Fig. 4 ist ein weiteres Ausführungsbeispiel gezeigt, das die Anwendung des Kennzahlensperrindikators (E-Bit) für sonstige kommende Bündel am Beispiel einer Handvermittlungsstelle 7 zeigt. Die Handvermittlungsstelle ist wiederum über Leitung 8 mit einer Auslandsvermittlungseinheit (VE:A) 2' verbunden. In dieser Auslandsvermittlungseinheit 2' erfolgt im Gegensatz zu den vorherigen Figuren das Aufsetzen des E-Bits. Auf Leitung 4 ist hier das Ergebnis der Auswertung der systeminternen Kennung hinsichtlich der Kennzahlensperre geführt. Das Ergebnis des Aufsetzens wird auch hier wieder über Leitung 3 der nachfolgenden Auslandsvermittlungseinheit (VE:A) 2' mittels NP.UKK mitgeteilt. Das Ergebnis der Auswertung auf Leitung 5 ist hier das Ergebnis für die Kennzahlensperre.

Das beschriebene Verfahren der carrierspezifischen Leitweglenkung gestattet in einer Multicarrierumgebung beim internationalen Transit dem Ursprungscarrier einen von ihm gewünschten Zielcarrier zu garantieren, auch bei Überweisung des Verkehrs auf eine oder mehrere nachfolgende Vermittlungseinheit(en). In äquivalenter Weise kann die carrierspezifische Leitweglenkung für die Anbindung von nationalen Carriern und nationalen Netzbetreibern und deren gewünschte individuelle Leitweglenkung in einer nachfolgenden Multicarrierumgebung an der nächsten Netzgrenze genutzt werden. Das carrierspezifische Leitweglenkungsverfahren schafft Prüfungsmöglichkeiten für vermittlungsanlagenspezifische Störungssuche bei Beschwerden der nationalen und internationalen Ursprungscarrier. Hierdurch können definierte Verbindungswege von einer Auslandsvermittlungseinheit 2' oder einer Netzübergangsvermittlungseinheit 2 zu den nachfolgenden Vermittlungseinheiten in den höheren Netzebenen aufgebaut werden. Eine Fehlereingrenzung auf eine Vermittlungseinheit eines bestimmten Herstellertyps ist hierdurch möglich, so daß Fehlerbehebungen schneller erfolgen können.

Die symmetrische Kennzeichnung des Eingangsbündels der Handvermittlung 7 oder ein entsprechender Parameter Ursprungskundenkennung NP.UKK mit einem gesetzten E-Bit gestattet jetzt tatsächlich die Kennzahlensperre außer Kraft zu setzen.

### Liste der Bezugszeichen

- 1: Nationaler Carrier
- 2: Netzübergangsvermittlungseinheit
- 2': Auslandsvermittlungseinheit
- 3,4,5: Leitungen
- 6: Internationaler Carrier
- 7: Handvermittlung
- 8: Leitung

## Patentansprüche

1. Verfahren zur Verkehrslenkung in vermittelnden Telekommunikationsnetzen (PSTN/ISDN), in denen über Netzübergangsvermittlungseinheiten oder Auslandsvermittlungseinheiten angebundene Nutzer in nachfolgenden Vermittlungseinheiten wie Weitverkehrsvermittlungsstellen (WVSt), Netzübergangsvermittlungseinheiten (VE:N) und Auslandsvermittlungseinheiten (VE:A) entsprechend der dort eingerichteten Verkehrslenkung in Form von gespeicherten Routing-Tabellen in Abhängigkeit unter anderem einer Zielkennzahl, eines ISDN Preference Indicators (IPI) und eines Transmission Medium Requirements (TMR) weitervermittelt werden, **dadurch gekennzeichnet, dass** die Verkehrslenkung in den Vermittlungseinheiten (2, 2') der höheren Netzebenen carrierspezifisch erfolgt, dass in den Netzübergangsvermittlungseinheiten (VE:N; 2) und in den Auslandsvermittlungseinheiten (VE:A; 2') bei Bedarf den nationalen und/oder internationalen Carriern in den vermittelnden Telekommunikationsnetzen (PSTN/ISDN) ein besonderer Parameter, nämlich eine Ursprungskundenkennung (NP.UKK) oder eine entsprechende systeminterne Kennzeichnung innerhalb der ersten Vermittlungseinheit zugeordnet wird, dass dieser Parameter ein spezielles Bit (C-Bit) zur Kennzeichnung des Carriers als sonderroutingberechtigt enthält, dass die genannte Ursprungskundenkennung (NP.UKK) außerdem eine binär codierte Kundenkennung enthält, dass durch Setzen eines speziellen Kennzahlensperrindikatorbits (E-Bit) eine eingerichtete Kennzahlensperre außer Kraft gesetzt wird und dass in der ersten Vermittlungseinheit anhand der systeminternen Kennzeichnung oder in den nachfolgenden Vermittlungseinheiten bei Empfang des Parameters mit dem gesetzten Bit (C-Bit) in gesonderte carrierspezifische Verkehrslenkungstabellen verzweigt wird.

2. Verfahren nach Anspruch 1, **dadurch gekennzeichnet, dass** sonstigen ankommenden Bündeln, zum Beispiel von einer Handvermittlung (7) ein besonderer Parameter, nämlich die Ursprungskundenkennung (NP.UKK) oder eine entsprechende systeminterne Kennzeichnung innerhalb der ersten Vermittlungseinheit (2') zugeordnet wird und dass dieser Parameter oder die entsprechende Kennzeichnung ein spezielles Bit (E-Bit) enthält, das eine eingerichtete Kennzahlensperre außer Kraft setzt.

3. Verfahren nach einem der Ansprüche 1 oder 2, **dadurch gekennzeichnet, dass** beim Nichtfinden der gewünschten Zielrufnummer in der zugehörigen Zielkennziffer der carrierspezifischen Verkehrslenkungstabelle automatisch die normale Verkehrslenkungstabelle aktiviert wird.

4. Verfahren nach einem der vorangehenden Ansprüche, **dadurch gekennzeichnet, dass** beim Verbindungsaufbau zu nachfolgenden Vermittlungseinheiten der höheren Ebenen der besondere Parameter (NP.UKK) mittels Initial Address Message (IAM) im ISDN User Part des Zeichengabesystems Nr. 7 (ISUP des ZGS Nr. 7) übertragen wird.

5. Verfahren nach einem der vorangehenden Ansprüche, **dadurch gekennzeichnet, dass** die carrierspezifische Leitweg-, bzw. Verkehrslenkung im Falle einer nicht erfolgreichen Operation carrierindividuell und zielkennzahlabhängig eingerichtet wird und dass in diesem Fall automatisch gesteuert entschieden wird, ob der Verbindungswunsch ausgelöst oder die normale Verkehrslenkungstabelle angewendet wird.

6. Verfahren nach einem der Ansprüche 1 bis 5, **dadurch gekennzeichnet, dass** eine Übertragung des besonderen Parameters beim Netzübergang in das internationale Netz (VE:A) oder das Zeichengabezwischennetz (VE:N) als nationaler Parameter unterdrückt wird.

7. Verfahren nach einem der Ansprüche 1 bis 5, **dadurch gekennzeichnet, dass** eine binär codierte Carrierkennung mindestens zwei Byte hat und mit einer Vergrößerungsmöglichkeit ausgestattet ist, dass das Sonderrouting in Abhängigkeit der Carrierkennung, einer oder mehrerer Zielkennziffern, des ISDN Preference Indicators (IPI) und des Transmission Medium Requirements (TMR) erfolgt.

8. Verfahren nach einem der Ansprüche 1 bis 5, **dadurch gekennzeichnet, dass** die in der Ursprungskundenkennung (NP.UKK) vorhandene binär codierte Kundenkennung mindestens 2 Byte mit Vergrößerungsmöglichkeit umfasst.

9. Verfahren nach einem der vorangehenden Ansprüche, **dadurch gekennzeichnet, dass** in der ersten Vermittlungseinheit anhand der systeminternen Kennzeichnung oder in den nachfolgenden Vermittlungseinheiten anhand der Ursprungskundenkennung mit einem zweiten Bit (E-Bit), eine Umlenkung des Verbindungswunsches auf Sonderhinweisansage außer Kraft gesetzt wird und eine Verkehrslenkung gemäß der normalen Leitweglenkungstabelle bei nichtgesetztem ersten Bit (C-Bit) oder eine carrierspezifische Leitweglenkung bei gesetzten C-Bit erfolgt.

10. Verfahren nach einem der Patentansprüche 1 bis 9, **dadurch gekennzeichnet, dass** das Aufsetzen des carrierspezifischen Parameters sowie eine Auswertung in der ersten Vermittlungseinheit (2 oder 2'), auf die der Carrier übertragen wird, erfolgt und das Ergebnis auf getrennten Leitungen (3 bzw. 4) zur Verfügung steht, wobei das Ergebnis auf der Leitung (3) auf die nachfolgenden Vermittlungseinheiten (2') zur dortigen Auswertung geleitet wird.

## Claims

1. Method for traffic routing in switching telecommunications networks (PSTN/ISDN), wherein users connected via network transition switching units or international switching units are onward-switched in following switching units such as long-distance exchanges (WVSt), network transition switching units (VE:N) and international switching units (VE:A) according to the therein established traffic routing in the form of stored routing tables as a function of, among other things, a destination code number, an ISDN preference indicator (IPI) and a transmission medium requirement (TMR), **characterized in that** the traffic routing in the switching units (2, 2') of the higher network levels is effected on a carrier-specific basis; **in that**, in the network transition switching units (VE:N; 2) and in the international switching units (VE:A; 2'), where necessary, the national and/or international carriers are associated in the switching telecommunications networks (PSTN/ISDN) with a special parameter, namely an originating customer code (NP.UKK) or a corresponding system-internal identifier within the first switching unit; **in that** said parameter contains a special bit (C-bit) for identifying the carrier as having special routing authorization; **in that** the aforementioned originating customer code (NP.UKK) additionally contains a binary-coded customer code; **in that** an activated code number block is disabled by setting a special code number block indicator bit (E-bit); and **in that**, when the parameter is received with the set bit (C-bit), in the first switching unit on the basis of the system-internal identifier or in the following switching units a branch is made to separate carrier-specific traffic routing tables.

2. Method according to claim 1, **characterized in that** other incoming trunk groups, for example from a manual switchboard (7), are associated with a special parameter, namely the originating customer code (NP.UKK) or a corresponding system-internal identifier within the first switching unit (2'); and **in that** said parameter or the corresponding identifier contains a special bit (E-bit) which disables an activated code number block.

3. Method according to any one of claim 1 or 2, **characterized in that**, if the desired destination call number is not found in the corresponding destination code number of the carrier-specific traffic routing table, the normal traffic routing table is automatically activated.

4. Method according to any one of the preceding claims, **characterized in that**, during call setup to following switching units of the higher levels, the special parameter (NP.UKK) is transmitted by means of initial address message (IAM) in the ISDN user part of the signalling system No. 7 (ISUP of signalling system No. 7).

5. Method according to any one of the preceding claims, **characterized in that**, in the case of a non-successful operation, the carrier-specific traffic routing is set up on a carrier-specific and destination-code-number-dependent basis and, in this case, it is decided under automatic control whether the call request is cleared down or whether the normal traffic routing table is used.

6. Method according to any one of claims 1 to 5, **characterized in that** the transmission of the special parameter is suppressed as a national parameter upon network transition to the international network (VE:A) or the intermediate signalling network (VE:N).

7. Method according to any one of claims 1 to 5, **characterized in that** a binary-coded carrier code has at least two bytes and is furnished with a possibility of an increase; **in that** the special routing is effected as a function of the carrier code, one or more destination code digits, the ISDN preference indicator (IPI) and the transmission medium requirement (TMR).

8. Method according to any one of claims 1 to 5, **characterized in that** the binary-coded customer code contained in the originating customer code (NP.UKK) comprises at least 2 bytes with the possibility of an increase.

9. Method according to any one of the preceding claims, **characterized in that** a diversion of the call request to a special recorded announcement is disabled in the first switching unit on the basis of the system-internal identifier or in the following switching units on the basis of the originating customer code with a second bit (E-bit) and there is a traffic routing according to the normal routing table if the first bit (C-bit) is not set or a carrier-specific routing if the C-bit is set.

10. Method according to any one of claims 1 to 9, **characterized in that** the attachment of the carrier-specific parameter as well as an evaluation are effected in the first switching unit (2 or 2') to which the carrier is transmitted and the result is available on separate lines (3 or 4), the result being sent on the line (3) to the following switching units (2') for evaluation there.

## Revendications

1. Procédé de routage dans des réseaux commutés de télécommunications (RTPC/RNIS), dans lesquels des utilisateurs raccordés par des unités de commutation inter-réseau ou des unités de commutation internationales sont reroutés sur des unités de commutation en aval du type central longue distance, unité de commutation inter-réseau et unité de commutation internationale, selon le routage y installé sous forme de tableaux de routage mémorisés, en fonction entre autres d'un indicatif d'abonné, d'un ISDN Preference Indicator (IPI) et d'un Transmission Medium Requirement (TMR), **caractérisé en ce que**
dans les unités de commutation (2, 2') des niveaux de réseau supérieurs, le routage se fait séparément par *carrier,*
dans les unités de commutation inter-réseau (VE :N ; 2) et dans les unités de commutation internationales (VE : A ; 2'), un paramètre spécial est attribué en cas de besoin aux carriers nationaux et/ou internationaux au sein des réseaux commutés de télécommunications (RTPC/RNIS), ce paramètre étant constitué d'un indicatif client d'origine (NP.UKK) ou d'un indicatif correspondant interne au système à l'intérieur de la première unité de commutation,
ce paramètre comprend un bit spécifique (bit C) pour **caractériser** le *carrier* comme autorisé pour le routage spécifique,
l'indicatif client d'origine susmentionné (NP.UKK) comprend en outre un indicatif client à codage binaire, un blocage d'indicatif ayant été mis en place est annulé par l'introduction d'un bit spécial d'identification de blocage d'indicatif (bit E) et,
une distribution a lieu sur des tableaux de routage séparés par *carriers* dans la première unité de commutation sur la base de l'indicatif interne au système ou dans les unités de commutation suivantes à la réception du paramètre comportant le bit introduit (bit C) .

2. Procédé selon la revendication 1, **caractérisé en ce que** un paramètre spécial est attribué aux autres faisceaux arrivant par exemple d'un central manuel (7), à savoir l'indicatif client d'origine (NP.UKK) ou un indicatif correspondant interne au système à l'intérieur de la première unité de commutation (2') et
ce paramètre ou l'indicatif correspondant comprend un bit spécial (bit E) qui annule un blocage d'indicatif ayant été mis en place.

3. Procédé selon l'une des revendications 1 ou 2,
**caractérisé en ce que**
le tableau de routage normal sera activé automatiquement, si le numéro d'abonné souhaité n'est pas trouvé dans l'indicatif d'abonné correspondant du tableau de routage individuel par *carrier.*

4. Procédé selon l'une des revendications précédentes,
**caractérisé en ce que**
le paramètre spécial (NP.UKK) est transmis lors de l'établissement de la liaison vers des unités de commutation en aval du niveau supérieur par un message initial d'adresse (IAM) du sous-ensemble utilisateur RNIS du système de signalisation no. 7

5. Procédé selon l'une des revendications précédentes,
**caractérisé en ce que**
si une opération n'a pas réussi, le choix de la voie d'acheminement ou le routage individuel par *carrier* a lieu individuellement par *carrier* et en fonction de l'indicatif d'abonné, et dans ce cas il est décidé automatiquement si la liaison souhaitée est déclenchée ou si le tableau de routage normal est appliqué

6. Procédé selon l'une des revendications 1 à 5, **caractérisé en ce que**
la transmission du paramètre spécial comme paramètre national est supprimée lors du passage dans le réseau international (VE : A) ou dans le réseau intermédiaire de signalisation (VE : N).

7. Procédé selon l'une des revendications 1 à 5, **caractérisé en ce que**
un indicatif *carrier* à codage linéaire est d'au moins deux octets, avec élargissement possible, le routage spécial se fait en fonction de l'indicatif *carrier,* d'un ou plusieurs indicatifs d'abonné, du ISDN Preference Indicator (IPI) et du Transmission Medium Requirement (TMR).

8. Procédé selon l'une des revendications 1 à 5, **caractérisé en ce que**
l'indicatif client à codage linéaire compris dans l'indicatif client d'origine (NP.UKK) est d'au moins deux octets, avec élargissement possible.

9. Procédé selon l'une des revendications précédentes,
**caractérisé en ce que**
sur la base de l'indicatif interne au système dans la première unité de commutation ou sur la base de l'indicatif client d'origine avec un deuxième bit (bit E) dans les unités de commutation suivantes, un reroutage de la communication communiqué par annonce spéciale est annulé ou il est procédé à un acheminement du trafic en fonction du tableau d'acheminement normal lorsque le premier bit (bit C) n'est pas inséré ou à un acheminement individuel par *carrier* lorsque le bit C est inséré.

10. Procédé selon l'une des revendications 1 à 9,
**caractérisé en ce que**
le paramètre de carrier est inséré et une analyse est effectuée dans la première unité de commutation (2 ou 2') par laquelle le *carrier* est routé, analyse dont le résultat est disponible sur des lignes séparées (3 ou 4), le résultat disponible sur la ligne (3) étant transmis aux unités de commutation suivantes (2') pour y être analysé.
